# EUROPEAN PATENT APPLICATION

(11) **EP 4 840 629 A1**
(43) Date of publication of application: **18.11.2026**
(21) Application number: 26175603.5
(22) Date of filing: 30.04.2026
(51) Int. Cl.: B32B 15/20, H01M 4/38, H01M 4/66, H01M 10/0525

(54) **COMPOSITE SUBSTRATE FOR RECHARGEABLE LITHIUM BATTERY AND RECHARGEABLE LITHIUM BATTERY INCLUDING THE SAME**

(30) Priority: 13.05.2025 KR 20250061667
(71) Applicant: SAMSUNG SDI CO., LTD., Yongin-si, Gyeonggi-do 17084 (KR)
(72) Inventor: KANG, Dayoung, 17084 Yongin-si, Gyeonggi-do (KR); KIM, Suhyun, 17084 Yongin-si, Gyeonggi-do (KR); LEE, Kyuseo, 17084 Yongin-si, Gyeonggi-do (KR); WOO, Seokho, 17084 Yongin-si, Gyeonggi-do (KR)
(74) Representative: Michalski Hüttermann & Partner mbB

(57) **Abstract**

The present disclosure relates to a composite substrate for a rechargeable lithium battery, a negative electrode including the composite substrate, and a rechargeable lithium battery including the composite substrate. The composite substrate includes a first metal layer, and a second metal layer on the first metal layer. An average grain size of the first metal layer is smaller than the average grain size of the second metal layer. An elongation at break of the second metal layer is greater than the elongation at break of the first metal layer. Wherein a tensile strength of the first metal layer is greater than the tensile strength of the second metal layer.

## Description

### CROSS-REFERENCE TO RELATED APPLICATION

This application claims priority to Korean Patent Application No. 10-2025-0061667 filed on May 13, 2025 in the Korean Intellectual Property Office.

### BACKGROUND

The present disclosure relates to a composite substrate for a rechargeable lithium battery, and to a rechargeable lithium battery including the composite substrate.

With increasing presence of battery-powered electronic devices such as, e.g., mobile phones, notebook computers, electric vehicles, and the like, the demand for rechargeable batteries with high energy density and large capacity is increasing. In response, enhancing the performance of rechargeable lithium batteries may be advantageous.

A rechargeable lithium battery generally includes a positive electrode, a negative electrode, and an electrolyte. Both the positive and negative electrodes contain active materials capable of lithium-ion intercalation and deintercalation. Electrical energy is generated through oxidation and reduction reactions as lithium ions move between the electrodes during charging or discharging.

### SUMMARY

The present disclosure describes a composite substrate with improved safety through a multilayer structure.

The present disclosure describes a rechargeable lithium battery including the composite substrate.

According to an example embodiment of the present disclosure, a composite substrate for a rechargeable lithium battery includes a first metal layer, and a second metal layer on the first metal layer. An average grain size of the first metal layer is smaller than an average grain size of the second metal layer. An elongation at break of the second metal layer is greater than an elongation at break of the first metal layer. A tensile strength of the first metal layer is greater than a tensile strength of the second metal layer.

According to an example embodiment of the present disclosure, a negative electrode for a rechargeable lithium battery includes the composite substrate according to the concept of the present disclosure; and a negative electrode active material layer on the composite substrate.

According to an example embodiment of the present disclosure, a rechargeable lithium battery includes a positive electrode, a negative electrode, and an electrolyte. The negative electrode includes the composite substrate according to the concept of the present disclosure and a negative electrode active material layer on the composite substrate.

### BRIEF DESCRIPTION OF DRAWINGS

FIG. 1 illustrates a schematic conceptual diagram of a rechargeable lithium battery according to example embodiments of the present disclosure.
FIGS. 2 to 5 illustrate schematic cross-sectional views of a rechargeable lithium battery according to an example embodiment, FIG. 2 showing a cylindrical battery, FIG. 3 showing a prismatic battery, and FIGS. 4 and 5 showing pouch-type batteries.
FIG. 6 illustrates a cross-sectional view of a rechargeable lithium battery according to an example embodiment of the present disclosure.
FIG. 7 illustrates a cross-sectional view for explaining a composite substrate according to an example embodiment of the present disclosure.
FIG. 8 is an SEM image showing the grain size of a high-elongation substrate according to example embodiments of the present disclosure.
FIG. 9 is an SEM image showing the grain size of a high-strength substrate according to example embodiments of the present disclosure.
FIGS. 10 and 11 illustrate cross-sectional views of a composite substrate according to another example embodiment of the present disclosure.

### DETAILED DESCRIPTION

To fully understand the configuration and effects of the present disclosure, some example embodiments are described with reference to the accompanying drawings. However, the present disclosure is not limited to the following example embodiments, and may be implemented in various forms. The example embodiments are provided solely to illustrate the present disclosure and to enable those skilled in the art to fully understand its scope.

In this description, when an element is described as being "on" another element, the element may be directly on the other element, or one or more intervening elements may be present therebetween. In the drawings, certain thicknesses may be exaggerated to better illustrate technical details. Throughout the specification, like reference numerals indicate like elements.

The example embodiments described herein may be illustrated using sectional and/or plan views, which are presented as idealized examples of the present disclosure. The thicknesses of layers and regions in the drawings may be exaggerated for clarity. The regions shown in the drawings are for illustrative purposes and should not be construed as limiting the scope of the present disclosure. Although terms such as "first," "second," and "third" may describe various elements, these terms are merely for distinction and do not imply any particular order or hierarchy. The example embodiments described and illustrated herein include complementary variations.

The terms used in this description explain various example embodiments, and are not intended to limit the present disclosure. Unless explicitly stated otherwise, singular forms may also include plural forms. The terms "comprises/includes" and "comprising/including" do not exclude the presence or addition of one or more other components.

The phrases "A or B," "at least one of A and B," "at least one of A or B," "A, B, or C," "at least one of A, B, and C," and "at least one of A, B, or C" include any one or all possible combinations of the listed elements.

In this description, the phrase "combination thereof" may refer to a mixture, a stack, a composite, a copolymer, an alloy, a blend, or a reaction product.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

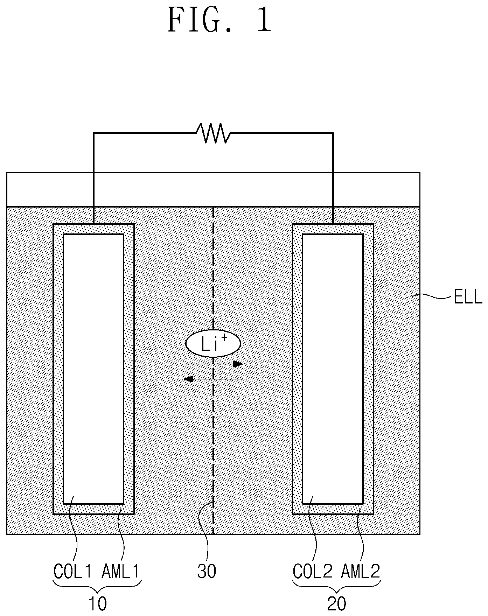

FIG. 1 is a cross-sectional view of a rechargeable lithium battery according to example embodiments of the present invention. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated in the electrolyte solution ELL.

The electrolyte solution ELL may be or include a medium for transferring lithium ions between the positive electrode 10 and the negative electrode 20. In the electrolyte solution ELL, the lithium ions may move through the separator 30 toward the positive electrode 10 or the negative electrode 20.

### Positive Electrode 10

The positive electrode 10 for the rechargeable lithium battery may include a current collector COL1 and a positive electrode active material layer AML1 on the current collector. The positive electrode active material layer AML1 may include a positive electrode active material and may further include a binder and/or a conductive material (e.g., an electrically conductive material).

For example, the positive electrode 10 may further include an additive that may constitute a sacrificial positive electrode.

An amount of the positive electrode active material may be in a range of about 90 wt% to about 99.5 wt% based on 100 wt% of the positive electrode active material layer AML1. Amounts of the binder and the conductive material may be in a range of about 0.5 wt% to about 10 wt%, respectively, based on 100 wt% of the positive electrode active material layer AML1.

The binder may attach the positive electrode active material particles to each other, and may attach the positive electrode active material to the current collector COL1. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, or the like, as non-limiting examples.

The conductive material may impart conductivity (e.g., electrical conductivity) to the electrode. Any material that does not cause chemical change (e.g., does not cause an undesirable chemical change in the rechargeable lithium battery), and that conducts electrons, may be used in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, silver, etc., in a form of a metal powder or a metal fiber; a conductive polymer such as a polyphenylene derivative; or a mixture thereof.

Al may be included as the current collector COL1, but the current collector COL1not limited thereto.

### Positive Electrode Active Material

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof, may be used.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn₈X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}GpO₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8).

In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

The positive electrode active material may be or include, for example, a high nickel-based positive electrode active material having a nickel amount of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity, and may be applied to a high-capacity, high-density rechargeable lithium battery.

### Negative Electrode 20

The negative electrode 20 for the rechargeable lithium battery may include a current collector COL2 and a negative electrode active material layer AML2 on the current collector COL2. The negative electrode active material layer AML2 may include a negative electrode active material, and may further include a binder and/or a conductive material (e.g., an electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may attach the negative electrode active material particles to each other, and may attach the negative electrode active material to the current collector COL2. The binder may include at least one of a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, or a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any material that does not cause chemical change (e.g., that does not cause an undesirable chemical change in the rechargeable lithium battery) and that conducts electrons may be used in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, etc. in a form of a metal powder or a metal fiber; a conductive polymer such as a polyphenylene derivative; or a mixture thereof.

The negative current collector COL2 may include at least one of a copper foil, a nickel foil, a stainless-steel foil, a titanium foil, a nickel foam, a copper foam, a polymer substrate coated with a conductive metal, or a combination thereof.

### Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be or include graphite such as non-shaped, sheet-shaped, flake-shaped, sphere-shaped, or fiber-shaped natural graphite or artificial graphite. The amorphous carbon may be or include at least one of a soft carbon, a hard carbon, a mesophase pitch carbonization product, calcined coke, or the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx (0 < x < 2), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, or a combination thereof), or a combination thereof. The Sn-based negative electrode active material may include at least one of Sn, SnO₂, a Sn-based alloy, or a combination thereof.

The silicon-carbon composite may be or include a composite of silicon and amorphous carbon. According to an example embodiment, the silicon-carbon composite may be in a form of silicon particles, and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

### Separator 30

Depending on the type of the rechargeable lithium battery, the separator 30 may be present between the positive electrode 10 and the negative electrode 20. The separator 30 may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof, on one or both surfaces of the porous substrate.

The porous substrate may be or include a polymer film formed of or including any one polymer such as or including at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic-based polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or a combination thereof, but is not limited thereto.

The organic material and the inorganic material may be mixed in one coating layer, or a coating layer including an organic material and a coating layer including an inorganic material may be stacked together.

### Electrolyte Solution ELL

The electrolyte solution ELL for the rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, or the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; and sulfolanes, and the like.

The non-aqueous organic solvents may be used alone, or in combination of two or more solvents.

In addition, when using a carbonate-based solvent, a cyclic carbonate and a chain carbonate may be mixed, and the cyclic carbonate and the chain carbonate may be mixed in a volume ratio in a range of about 1:1 to about 1:9.

The lithium salt dissolved in the organic solvent supplies lithium ions in a battery, enables an operation of a rechargeable lithium battery, and improves transportation of the lithium ions between positive and negative electrodes. Examples of the lithium salt include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), or lithium bis(oxalato)borate (LiBOB).

### Rechargeable Lithium Battery

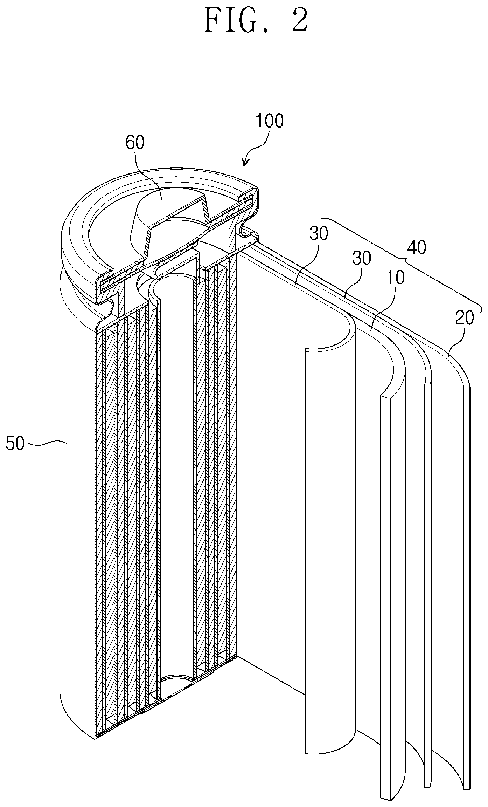

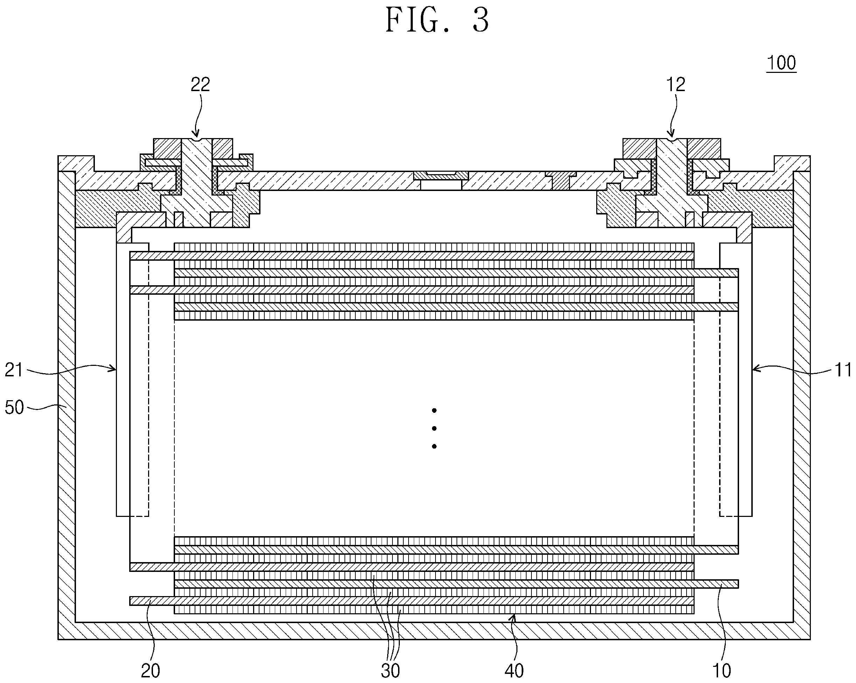

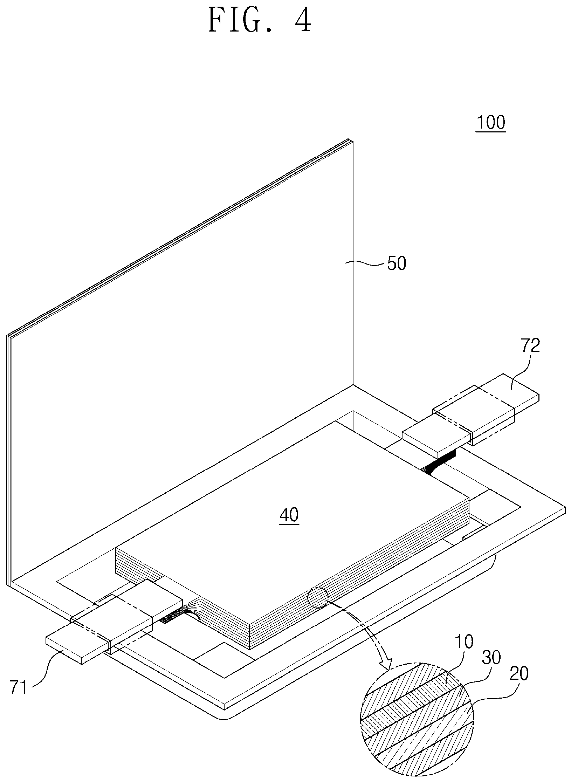

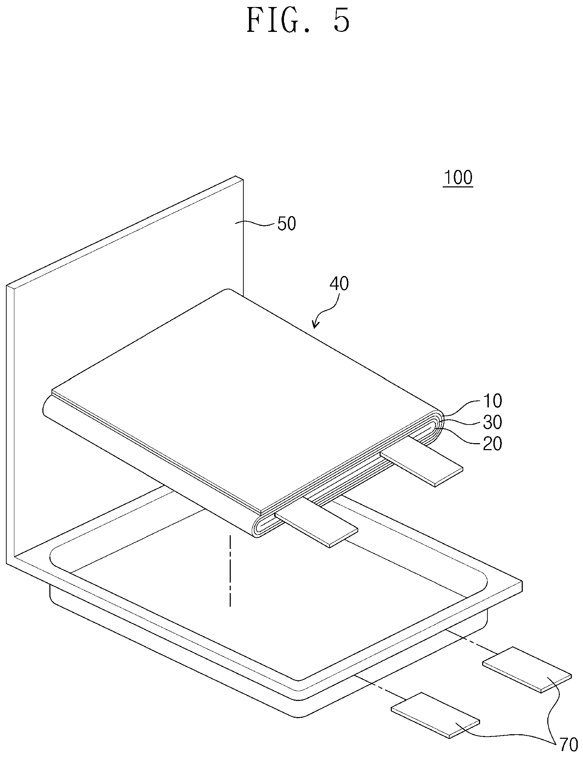

The rechargeable lithium battery may be classified into cylindrical, prismatic, pouch, or coin-type batteries, and the like depending on their shape. FIGS. 2 to 5 are schematic views illustrating a rechargeable lithium battery according to an example embodiment. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12 connected to the positive lead tab 11, a negative lead tab 21, and a negative terminal 22 connected to the negative lead tab 21. As shown in FIGS. 4 and 5, the rechargeable lithium battery 100 may include an electrode tab 70 illustrated in FIG. 5, or, for example, a positive electrode tab 71 and a negative electrode tab 72 illustrated in FIG. 4, the electrode tabs 70/71/72 forming an electrical path for inducing the current formed in the electrode assembly 40 to the outside of the battery 100.

In the example embodiments of the present disclosure to be described below, the technical features overlapping with the rechargeable lithium battery described above with reference to FIGS. 1 to 5 are not described in detail, and the differences therewith are described in detail.

The rechargeable lithium battery may include a composite substrate. The composite substrate may be used as a base on which an electrode active material layer is formed. The composite substrate may be used as a current collector such as, e.g., current collectors COL1 or COL2.

In the present disclosure, the term "composite substrate" may refer to a structure in which two or more different materials or structures are combined to form a single functional substrate. The term "different structures" may include cases where the materials are the same but differ in structural or mechanical characteristics such as crystal structure, grain size, pore distribution, pore size, tensile strength, or elongation at break.

The composite substrate may constitute a current collector on its own, or may constitute a current collector in combination with another substrate, such as a metal foil. In addition, the composite substrate may be disposed between a current collector and an electrode active material layer to constitute a functional layer.

In an example embodiment, a composite substrate for the rechargeable lithium battery may be used as the current collector COL2.

Hereinafter, in the present disclosure, the term "current collector COL1" may be used interchangeably with "positive electrode current collector COL1," and the term "current collector COL2" may be used interchangeably with "negative electrode current collector COL2".

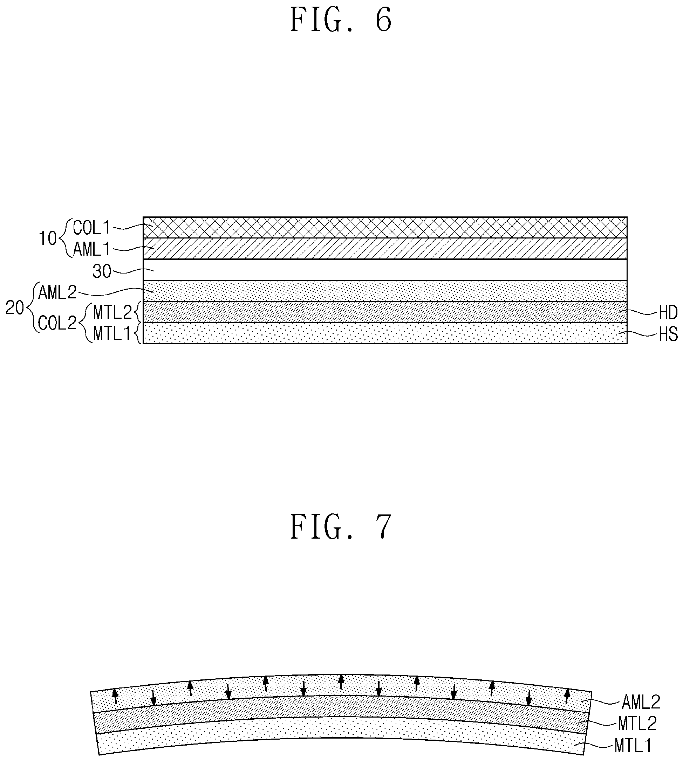

FIG. 6 illustrates a cross-sectional view of a rechargeable lithium battery according to an example embodiment of the present disclosure. Referring to FIG. 6, as described above with reference to FIG. 1, the rechargeable lithium battery according to the present disclosure may include a positive electrode 10, a negative electrode 20, and a separator 30 between the positive electrode 10 and the negative electrode 20. Although not explicitly shown in FIG. 6, the rechargeable lithium battery according to examples of the present disclosure may further include an electrolyte solution ELL (not shown). The separator 30 may be impregnated in the electrolyte solution ELL.

The positive electrode 10 may include a positive electrode current collector COL1, and a positive electrode active material layer AML1 on the positive electrode current collector COL1. The negative electrode 20 may include a negative electrode current collector COL2, and a negative electrode active material layer AML2 on the negative electrode current collector COL2. A thickness of the negative electrode current collector COL2 may be in a range of about 5 µm to about 20 µm, and the thickness of the negative electrode current collector COL2 may be selected as desired depending on design requirements of the rechargeable lithium battery. The separator 30 may be present between the positive electrode active material layer AML1 and the negative electrode active material layer AML2.

FIG. 6 illustrates a cross-sectional view of a rechargeable lithium battery according to an example embodiment of the present disclosure, in which the composite substrate may be or include, for example, a negative electrode current collector COL2. Referring to FIG. 6, the negative electrode current collector COL2 may include a first metal layer MTL1, and a second metal layer MTL2 on the first metal layer MLT1. As an example, each of, or at least one of, the first metal layer MTL1 and the second metal layer MTL2 may include copper (Cu). In an example embodiment of the present disclosure, an average grain size of the first metal layer MTL1 may be smaller than the average grain size of the second metal layer MTL2. In the present disclosure, the term "grain" may refer to a microscopic region within a solid material that has a substantially uniform crystal structure and orientation. Grains may be distinguished from one another by grain boundaries. In the present disclosure, the term "grain size" may refer to an average grain size, unless otherwise specified. A tensile strength of the first metal layer MTL1 may be greater than the tensile strength of the second metal layer MTL2. An elongation at break of the second metal layer MTL2 may be greater than the elongation at break of the first metal layer MTL1. A ratio of the average grain size of the second metal layer MTL2 to the average grain size of the first metal layer MTL1 may be in a range of about 1.5 to about 3.

As the grain size decreases, the number of grain boundaries increases, which may hinder dislocation movement and thereby increase the tensile strength. Conversely, as the grain size increases, the number of grain boundaries decreases, allowing dislocations to move more readily, which may result in a decrease in tensile strength. Accordingly, the tensile strength of the first metal layer MTL1 may be greater than the tensile strength of the second metal layer MTL2. As the grain size decreases, a deformation becomes less uniformly distributed across grain boundaries, which may reduce the elongation at break. Conversely, as the grain size increases, the deformation becomes more uniformly distributed, which may increase the elongation at break. Therefore, the elongation at break of the second metal layer MTL2 may be greater than the elongation at break of the first metal layer MTL1.

FIG. 7 illustrates a cross-sectional view for explaining a composite substrate according to an example embodiment. FIG. 7 may be a cross-sectional view of the negative electrode 20 when the volume of the negative electrode active material layer AML2 has expanded due to charging and/or discharging.

Referring to FIG. 7, the negative electrode active material layer AML2 according to an example embodiment of the present disclosure may include a silicon-based negative electrode active material. For example, the negative electrode active material layer AML2 may include a mixture of the silicon-based negative electrode active material and a carbon-based negative electrode activity material. The silicon-based negative electrode active material may accommodate lithium ions and expand in volume contemporaneously or at the same time. Thus, during the charging process of the battery, a volume of the negative electrode active material layer AML2 may be expanded. The volume of the silicon-based negative electrode active material may shrink simultaneously or contemporaneously with the release of lithium ions. Thus, during the discharge process of the battery, the volume of the negative electrode active material layer AML2 may shrink.

The elongation at break of the second metal layer MTL2 may be greater than the elongation at break of the first metal layer. Accordingly, the second metal layer MTL2 adjacent to the negative electrode active material layer AML2 may reduce or prevent cracking of the negative electrode current collector COL2 during the volume expansion and contraction of the negative electrode active materials layer AML2.

Referring again to FIG. 7, the tensile strength of the first metal layer MTL1 may be greater than the tensile strength of the second metal layer MTL2. As a result, the mechanical strength of the current collector COL2 may be increased. When the current collector COL2 has a high mechanical strength, the mechanical stability of the electrode plate may be secured during the electrode plate manufacturing process.

The tensile strength and elongation at break may be measured via UTM equipment. For example, the elongation at break may be measured by preparing a sample according to an international standard such as ASTM E8 or ISO 6892, and applying a tensile force to the sample at a constant rate until fracture, followed by measuring the amount of elongation. The elongation at break may then be calculated by the following Equation 1. Equation 1: 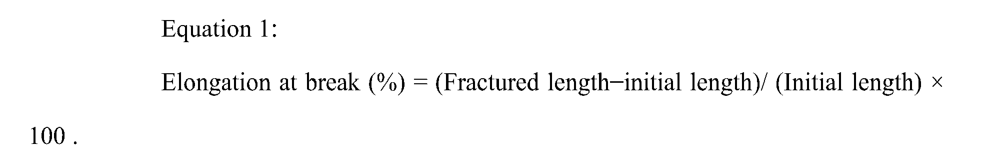 Elongation at break (%) = (Fractured length-initial length)/ (Initial length) × 100.

In addition, the tensile strength may be measured by preparing a sample according to an international standard such as ASTM E8 or ISO 6892, applying a tensile force to the sample at a constant rate until fracture, and recording load-displacement data to determine the maximum load. The tensile strength may then be calculated by the following Equation 2. Equation 2: $Tensile strength \left(N/{mm}^{2}\right) = \left(maximum load/cross-sectional area\right) \times 100 .$

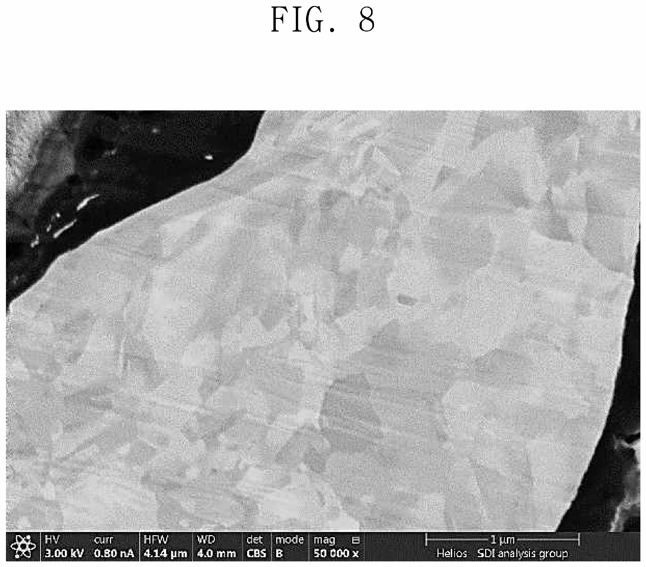

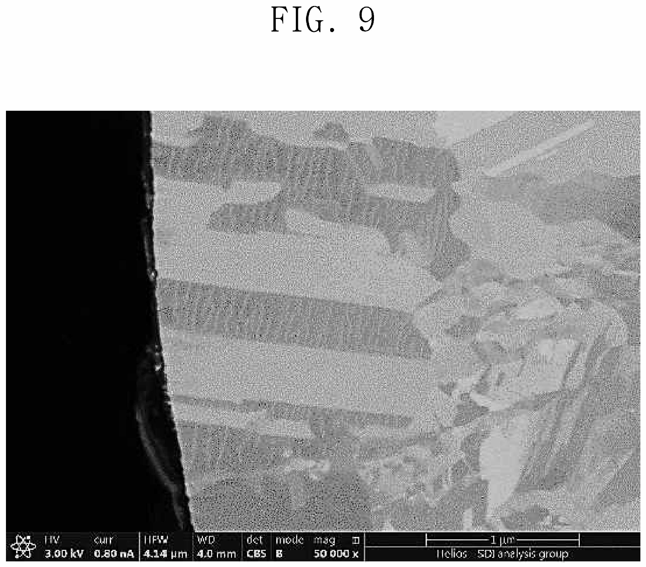

Referring to FIG. 6, the second metal layer MTL2 may be or include a high-elongation substrate HD, and the first metal layer MTL1 may be or include a high-strength substrate HS. FIG. 8 is an SEM image showing the grain size of the high-elongation substrate HD. FIG. 9 is an SEM image showing the grain size of the high-strength substrate HS.

Referring to FIGS. 6 and 8, the second metal layer MTL2 may be or include a high-elongation substrate HD. The grain size of the second metal layer MTL2 may be in a range of about 1.0 µm to about 2.0 µm. The grain size may be measured, for example, using a Scanning Electron Microscope (SEM). For example, a region (about 1 cm²) having a width of about 1 cm and a length of about 1 cm may be taken as a sample from the high-elongation substrate HD, the sample may be fixed to the SEM stage, and then the SEM may be photographed to secure a cross-sectional image. By analyzing the image using image analysis software (e.g., Image J), the grain size may be calculated.

Referring to FIGS. 6 and 9, the first metal layer MTL1 may be or include a high-strength substrate HS. The grain size of the first metal layer MTL1 may be in a range of about 0.4 µm to about 0.8 µm. The grain size of the high-strength substrate HS may be determined in the same manner as described above for the high-elongation substrate HD.

Referring to FIG. 6, a ratio of a thickness of the second metal layer to a thickness of the first metal layer MTL1 may be in a range of about 0.5 to about 1.5. When the first metal layer MTL1 and the second metal layer MTL2 satisfy the above-mentioned thickness ratio, it may be possible to ensure a mechanical stability while mitigating as desired the risk of cracks caused by a volume expansion.

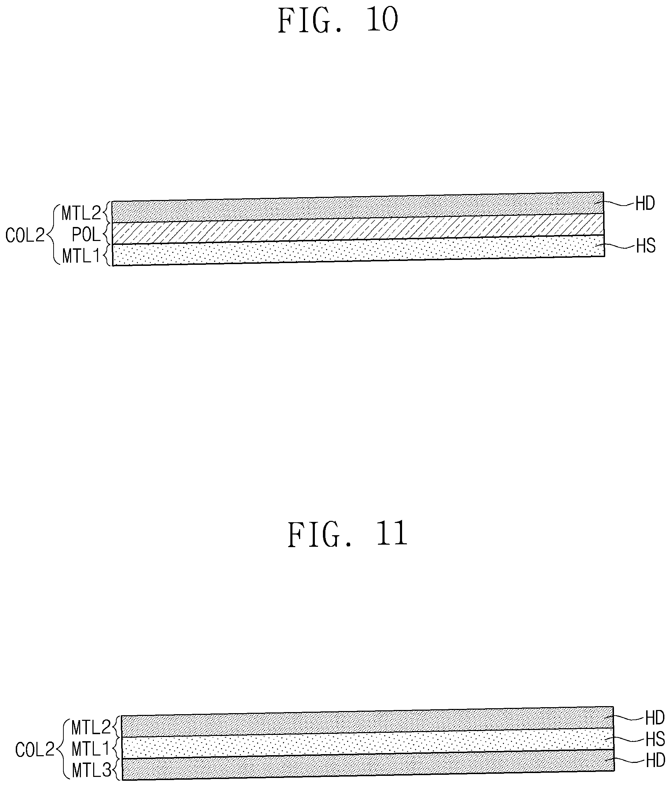

FIGS. 10 and 11 illustrate cross-sectional views of a composite substrate according to another example embodiment of the present disclosure.

Referring to FIG. 10, the composite substrate may include an intermediate layer POL between the first metal layer MTL1 and the second metal layer MTL2. The intermediate layer POL may include a polymer. For example, the intermediate layer may include a polymer film formed of or including any one polymer such as or including at least one of polyethylene terephthalate (PET), polycarbonate (PC), polyvinyl chloride (PVC), nylon (PA), polyurethane (PU), polypropylene (PP), or polyetherketone (PEK), or a copolymer, or a mixture of two or more thereof.

Referring to FIG. 11, the composite substrate may further include a third metal layer MTL3. The first metal layer MTL1 may be positioned between the second metal layer MTL2 and the third metal layer MTL3. The average grain size of the first metal layer MTL1 may be smaller than the average grain size of the third metal layer MTL3. The third metal layer MTL3 may have a relatively large grain size, and may thus exhibit a high elongation at break. By including such a third metal layer, the composite substrate may relieve stress caused by the expansion of the negative electrode active material layer AML2 and may reduce or prevent cracking of the composite substrate.

Referring back to FIG. 11, an average grain size of the third metal layer MTL3 may be in a range of about 1.0 µm to about 2.0 µm. The average grain size of the third metal layer MTL3 may be calculated by performing the same process as the method for calculating the grain size of a high-elongation substrate HD.

The following Examples and Comparative Examples are provided in order to highlight characteristics of one or more example embodiments, but it is understood that the Examples and Comparative Examples are not to be construed as limiting the scope of the example embodiments, nor are the Comparative Examples to be construed as being outside the scope of the example embodiments. Further, it is understood that the example embodiments are not limited to the particular details described in the Examples and Comparative Examples.

### Example 1

A first metal layer having a high strength property and an average grain size of about 0.6 µm was formed by controlling the current density using an electroplating method. Subsequently, a second metal layer was formed on the upper surface of the first metal layer by reducing the current density. The second metal layer had a high elongation property and an average grain size of about 1.2 µm, thereby preparing a composite substrate for a rechargeable lithium battery having a double-layer structure. At this time, a thickness of the first metal layer was about 4 µm, and a thickness of the second metal layer was also about 4 µm. That is, a total thickness of the composite substrate was about 8 µm, and a ratio of the thickness of the second metal layer to the first metal layer was about 1.

### Example 2

A PET film having a thickness of about 6 µm was prepared. A first metal layer was formed on one surface of the PET film using an electroplating method. The first metal layer had an average grain size of about 0.6 µm and exhibited a high strength property. Subsequently, a second metal layer was formed on the other surface of the PET film by lowering the current density using an electroplating method. The second metal layer had a grain size of about 1.2 µm and exhibited a high elongation property. As a result, a composite substrate for a rechargeable lithium battery having a three-layer structure with a polymer layer as an intermediate layer was prepared. At this time, a thickness of the first metal layer was about 1 µm, and a thickness of the second metal layer was about 1 µm, resulting in a total thickness of about 8 µm for the composite substrate.

### Example 3

The first metal layer and the second metal layer were formed in the same manner as in Example 1. Thereafter, a third metal layer was formed on the lower surface of the first metal layer using the same current density as used in the formation of the second metal layer. The third metal layer had an average grain size of about 1.2 µm and exhibited a high elongation property. As a result, a composite substrate for a rechargeable lithium battery having a three-layer metal structure was prepared. In the prepared composite substrate having a thickness of about 8 µm, the thicknesses of the first metal layer, the second metal layer, and the third metal layer were about 3 µm, about 2 µm, and about 3 µm, respectively.

### Comparative Example 1

A general substrate having a thickness of about 8 µm and a high elongation property with an average grain size of about 1.2 µm was prepared using an electroplating method.

### Comparative Example 2

A general substrate having a thickness of about 8 µm and having a high strength property with an average grain size of about 0.6 µm was prepared using an electroplating method.

### Comparative Example 3

A first metal layer having high elongation property and an average grain size of about 1.2 µm was formed by controlling the current density using an electroplating method. Subsequently, a second metal layer was formed on the upper surface of the first metal layer by increasing the current density. The second metal layer had a high strength property and an average grain size of about 0.6 µm, thereby preparing a composite substrate for a rechargeable lithium battery having a double-layer structure. A thickness of the first metal layer was about 4 µm, and a thickness of the second metal layer was also about 4 µm. That is, a total thickness of the composite substrate was about 8 µm, and a ratio of the thickness of the second metal layer to the first metal layer was about 1.

### Comparative Example 4

A PET film having a thickness of about 6 µm was prepared. A first metal layer was formed on one surface of the PET film using an electroplating method. Thereafter, a second metal layer was formed on the other surface of the PET film using the same current density. Both the first metal layer and the second metal layer had an average grain size of about 1.2 µm and exhibited a high elongation property. As a result, a composite substrate for a rechargeable lithium battery having a three-layer structure with a polymer layer as an intermediate layer was prepared. A thickness of the first metal layer was about 1 µm, and a thickness of the second metal layer was about 1 µm, resulting in a total thickness of about 8 µm for the composite substrate.

### Production of Rechargeable Lithium Battery

An aluminum Foil having a thickness of about 15 µm was prepared as a positive electrode current collector. A positive electrode active material (LiNi_{0.91}Co₀.₀₇Al_{0.02}O₂), a binder (polyvinylidene fluoride), and a conductive material (Ketjen black) were mixed at a weight ratio of about 97:2:1, and dispersed in N-methylpyrrolidone to prepare a positive electrode active material slurry.

The positive electrode active material slurry was coated on a current collector having a thickness of about 15 µm, dried at about 110 °C, and then pressed to prepare a positive electrode.

A negative electrode active material slurry was prepared by mixing artificial graphite and silicon nanoparticles in a weight ratio of about 93:7 as a negative electrode active material, and styrene-butadiene rubber (SBR) as a binder and carboxymethyl cellulose (CMC) as a thickener in a weight ratio of about 97:1:2, respectively, and dispersed in distilled water to prepare a negative electrode active material slurry.

The negative electrode active material slurry was coated on the composite substrate (or general substrate) of Examples and Comparative Examples, dried at about 100 °C, and then pressed to prepare a negative electrode.

An electrode assembly was prepared by assembling the positive electrode, the negative electrode, and a separator made of polyethylene having a thickness of about 10 µm, and the electrolyte solution was injected to prepare a rechargeable lithium battery.

### Evaluation Example 1: Tensile Strength Evaluation

The tensile strengths of the Examples and Comparative Examples were measured. Specifically, a sample was prepared in accordance with an international standard such as ASTM E8 or ISO 6892, and the tensile strength was calculated according to Equation 2 by applying tension to the sample at a constant rate, recording load-displacement data until fracture, and measuring the maximum load. The results are shown in Table 1 below.

### Evaluation Example 2: Elongation at Break Evaluation

Elongation at break of the Examples and Comparative Examples was measured. Specifically, a sample was prepared in accordance with an international standard such as ASTM E8 or ISO 6892, and a tensile load was applied to the sample at a constant rate. The elongation at break was calculated according to Equation 1 by measuring the extension of the sample until fracture. The results are shown in Table 1 below.

### Evaluation Example 3: Crack Evaluation

The rechargeable lithium batteries prepared by Examples and Comparative Examples were charged and discharged at 80% SOC at a constant current of 1 C to confirm whether or not crack of the substrate occurred. The number of charge-discharge cycles is shown together and is shown in Table 1 below.

**Table 1:**

| Negative electrode Substrate | Total thickness | Grain size (µm) | | | Tensile strength | Elonga tion at break (%) | Cycle | Crack occurrence |
|---|---|---|---|---|---|---|---|---|
| | (µm) | MET 1 | MET 2 | MET 3 | (N/mm²) | | (@SOC80) | |
| Example 1 | 8 | 0.6 | 1.2 | - | 480 | 7 | 168 | X |
| Example 2 | 8 | 0.6 | 1.2 | - | 216 | 14 | 167 | X |
| Example 3 | 8 | 0.6 | 1.2 | 1.2 | 444 | 10 | 162 | X |
| Compara tive Example 1 | 8 | 1.2 | 1.2 | - | 360 | 16 | 139 | O |
| Compara tive Example 2 | 8 | 0.6 | 0.6 | - | 530 | 4 | 127 | O |
| Compara tive Example 3 | 8 | 1.2 | 0.6 | - | 473 | 7 | 131 | O |
| Compara tive Example 4 | 8 | 1.2 | 1.2 | - | 211 | 13 | 103 | O |

Referring to Table 1 above, it can be confirmed that the batteries according to the example embodiments did not exhibit crack formation during charging and/or discharging, in contrast to the rechargeable lithium batteries according to the comparative examples. This indicates that, despite the significant volume expansion of the Si-based negative electrode active material during charging and/or discharging, the example embodiments of the present disclosure exhibit a desired or improved mechanical stability and an effective crack reduction or prevention capability.

In the case of Example 1, when compared with Comparative Examples 1 to 3, it can be confirmed that both desired tensile strength and elongation at break were achieved. Specifically, Example 1 exhibited higher tensile strength than Comparative Example 1, which was composed only of a high-elongation substrate, and showed higher elongation at break than Comparative Example 2, which was composed only of a high-strength substrate. Furthermore, although the tensile strength and elongation at break were similar to the tensile strength and elongation at break of Comparative Example 3, in which the first metal layer was made of a high-elongation substrate and the second metal layer was made of a high-strength substrate, it was confirmed that no crack occurred during the charge and discharge cycles, due to the direct contact between the high-elongation substrate and the negative electrode active material layer.

In the cases of Example 2 and Comparative Example 4, it was confirmed that the composite substrate exhibited high elongation at break and low tensile strength due to the presence of the PET layer, which is a polymer composition having high elongation properties. However, when Example 2 was compared with Comparative Example 4, it was confirmed that no cracks were generated during the charge and discharge cycles, as the high-elongation substrate was in direct contact with the negative electrode active material layer.

In the case of Example 3, when compared with Comparative Example 3, it was confirmed that the addition of a third metal layer having high elongation properties beneath the first metal layer resulted in slightly lower tensile strength but higher elongation at break. Furthermore, since the high-elongation substrate was in direct contact with the negative electrode active material layer, no cracks were observed during the charge and discharge cycles.

The composite substrate according to the present disclosure may have a multilayer structure including a metal layer having a high elongation property and a metal layer having a high strength property, thereby providing the combined advantages of both high elongation and high strength.

The negative electrode for the rechargeable lithium battery including the composite substrate of the present disclosure may reduce or suppress cracking of the substrate due to the volume expansion and contraction of the active material layer. The composite substrate of the present disclosure may provide a negative electrode for a rechargeable lithium battery having a desired or improved mechanical strength.

The rechargeable lithium battery including the composite substrate of the present disclosure may have a desired or improved cell performance.

While the present disclosure has been described with reference to example embodiments, it should be understood that these example embodiments are provided for illustrative purposes only and do not limit the scope of the present disclosure. Various modifications and equivalent arrangements may be made without departing from the spirit and scope of the appended claims. Accordingly, the described embodiments should be regarded as examples rather than limitations of the present disclosure.

## Claims

1. A composite substrate (COL2) for a rechargeable lithium battery, the composite substrate comprising:
a first metal layer (MTL1); and
a second metal layer (MTL2) on the first metal layer (MTL1),
wherein an average grain size of the first metal layer (MTL1) is smaller than an average grain size of the second metal layer (MTL2),
wherein the grain size is determined by a Scanning Electron Microscope,
wherein an elongation at break of the second metal layer (MTL2) is greater than an elongation at break of the first metal layer (MTL1), and
wherein a tensile strength of the first metal layer (MTL1) is greater than a tensile strength of the second metal layer (MTL2),
and wherein the elongation at break and the tensile strength are determined by UTM equipment according to ASTM E8 or ISO 6892.

2. The composite substrate (COL2) of claim 1, wherein the average grain size of the second metal layer (MTL2) is in a range of 1.0 µm to 2.0 µm.

3. The composite substrate (COL2) of claim 1 or 2, wherein the average grain size of the first metal layer (MTL1) is in a range of 0.4 µm to 0.8 µm.

4. The composite substrate (COL2) of any one of claims 1 to 3, wherein a ratio of the average grain size of the second metal layer (MTL2) to the average grain size of the first metal layer (MTL1) is in a range of 1.5 to 3.

5. The composite substrate (COL2) of any one of claims 1 to 4, wherein a ratio of a thickness of the second metal layer (MTL2) to a thickness of the first metal layer (MTL1) is in a range of 0.5 to 1.5.

6. The composite substrate (COL2) of any one of claims 1 to 5, wherein at least one of the first metal layer (MTL1) and the second metal layer (MTL2) comprises copper (Cu).

7. The composite substrate (COL2) of any one of claims 1 to 6, further comprising an intermediate layer (POL) between the first metal layer (MTL1) and the second metal layer (MTL2),
wherein the intermediate layer (POL) comprises a polymer.

8. The composite substrate (COL2) of any one of claims 1 to 7, further comprising a third metal layer (MTL3),
wherein the first metal layer (MTL1) is between the second metal layer (MTL2) and the third metal layer (MTL3), and
wherein the average grain size of the first metal layer (MTL1) is smaller than an average grain size of the third metal layer (MTL3).

9. The composite substrate (COL2) of claim 8, wherein the average grain size of the third metal layer (MTL3) is in a range of 1.0 µm to 2.0 µm.

10. A negative electrode (20) for a rechargeable lithium battery (100), the negative electrode (20) comprising:
the composite substrate (COL2) of any one of claims 1 to 9; and
a negative electrode active material layer (AML2) on the composite substrate (COL).

11. The negative electrode (20) of claim 10, wherein the negative electrode active material layer (AML2) comprises a silicon-based negative electrode active material.

12. The negative electrode (20) of claim 11, wherein the negative electrode active material layer (AML2) further comprises a carbon-based negative electrode active material.

13. The negative electrode (20) of any one of claims 10 to 12, wherein the composite substrate (COL) is configured to mitigate stress caused by expansion of the negative electrode active material layer (AML2) during one of charging and discharging.

14. A rechargeable lithium battery (100) comprising:
a positive electrode (10);
a negative electrode (20); and
an electrolyte (30),
wherein the negative electrode (20) comprises the composite substrate (COL) according to any of claims 1 to 9, and a negative electrode active material layer (AML2) on the composite substrate; or wherein the negative electrode (20) is configured of any one of claims 10 to 13.

15. The rechargeable lithium battery (100) of claim 14, wherein a thickness of the composite substrate (COL) is in a range of 5 µm to 20 µm.
